# EUROPÄISCHE PATENTSCHRIFT

(11) **EP 1 957 334 B1**
(45) Veröffentlichungstag und Bekanntmachung des Hinweises auf die Patenterteilung: **29.07.2009**
(21) Anmeldenummer: 06818611.3
(22) Anmeldetag: 17.11.2006
(51) Int. Cl.: B60T 13/74, F16D 65/092, F16D 65/14, F16D 65/38

(54) **SCHEIBENBREMSE IN SELBSTVERSTÄRKENDER BAUART MIT BELAGSTABILISIERUNG**
SELF-BOOSTING DISK BRAKE WITH LINING STABILIZATION
FREIN À DISQUE À RENFORT AUTOMATIQUE ET STABILISATION DES GARNITURES

(30) Priorität: 24.11.2005 DE 102005056064
(43) Veröffentlichungstag der Anmeldung: 20.08.2008
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE)
(74) Vertreter: Mattusch, Gundula
(86) Internationale Anmeldenummer: PCT/EP2006/011030
(87) Internationale Veröffentlichungsnummer: WO 2007/059895

(56) Entgegenhaltungen:
- WO-A-03/071150
- WO-A-20/05064195
- WO-A-20/06040006
- DE-B3- 10 319 082
- US-A- 3 285 372

## Beschreibung

Die Erfindung betrifft eine Scheibenbremse in selbstverstärkender Bauart nach dem Oberbegriff des Anspruchs 1. So eine Scheibenbremse geht z.B. aus WO-A-03/071150 hervor.

Selbstverstärkende Scheibenbremsen sind - auch mit elektromechanischem Aktuator - an sich in verschiedenen Ausführungsformen bekannt. Die Mehrzahl der beschriebenen Lösungen beschreibt allerdings Wirkprinzipien, welche zwar eine Selbstverstärkung ermöglichen, die aber aufgrund eines umständlichen konstruktiven Aufbaus nicht zur Realisierung einer serienreifen, wirtschaftlich herstellbaren Scheibenbremse für schwere Nutzfahrzeuge geeignet sind.

So ist es ein Problem bei gattungsgemäßen selbstverstärkenden Scheibenbremsen für Nutzfahtzeugen, auf einfache konstruktive Weise eine effiziente radiale Stabilisierung insbesondere des zuspannseitigen Bremsbelages zu realisieren. Da die beiden Druckstempel von Nutzfahrzeugbremsen mit zwei Druckstempeln in Umfangsrichtung bzw. tangential zueinander versetzt angeordnet sind, wird die Anordnung effizient gegen Umfangsschrägverschleiß stabilisiert. In zur Bremsscheibendrehachse radialer Richtung ist aber keine oder zumindest nur eine sehr geringe Richtwirkung vorhanden. Insbesondere bei der Verwendung von Kugeln als Rollkörpern zwischen dem zuspannseitigen Bremsbelag und der Druckstempeln ist es denkbar, dass der Bremsbelag zumindest bei nicht optimaler Abstimmung im nicht betätigten Zustand der Bremse ins Pendeln kommt, was ein ständiges Anlaufen der Bremsscheibe bewirken kann, was wiederum in einer undefinierten Abnutzung resultieren kann.

In gleicher Weise kann ein bei Bremsvorgängen entstehender Radialschrägverschleiß ungehindert fortschreiten. Die Folge ist ein frühzeitiger Verschleiß des Bremsbelages, was insbesondere bei einer Auslegung der Scheibenbremse für schwere Nutzfahrzeuge unnötig hohe Servicekosten und Ausfallzeiten des Fahrzeuges hervorrufen kann.

Aus diesem Grunde wurde im Stand der Technik bereits vorgeschlagen, bei einer Scheibenbremse über die seit langem bekannte Anordnung von zwei Zustellpunkten bzw. Druckstempeln hinaus (eine derartige Anordnung ist beispielsweise bereits von pneumatisch betätigten Scheibenbremsen an sich bekannt) weitere Zuspannpunkte vorzusehen, um eine ausreichende Richtwirkung hervorzurufen. Einen derartigen Vorschlag offenbart beispielsweise die DE 103 36 284 A1.

Bei Nutzfahrzeugbremsen ist jedoch die Anordnung z.B. eines dritten Druckstempels aufgrund der notwendigen Verschleißnachstellung sehr aufwendig und auch aus Platzgründen nicht oder nur schwer realisierbar.

Vor diesem Hintergrund soll mit einfachen konstruktiven Mitteln eine effiziente radiale Stabilisierung des zuspannseitigen Bremsbelages für selbstverstärkende Scheibenbremsen erreicht werden.

Die Lösung dieses Problems ist die Aufgabe der Erfindung.

Die Erfindung löst diese Aufgabe durch den Gegenstand des Anspruchs 1.

Danach sind die beiden Druckstempel bzw. Bremsstempel mittels einer Verbindungsplatte miteinander verbunden, wobei im Bereich neben den Bremsstempeln zwischen dem Bremsbelag oder einer Bremsbelageinheit aus Bremsbelag und zusätzlicher Druckplatte und der Verbindungsplatte wenigstens eine oder mehrere Rampenanordnungen ausgebildet ist/sind.

Mittels der wenigstens einen oder mehreren Rampenanordnungen zwischen dem Bremsbelag (bzw. einer Bremsbelageinheit, die den Bremsbelag und ggf. eine Druckplatte oder dgl. umfasst) und der Verbindungsplatte in Ergänzung der Bremsstempel lässt sich auf einfache Weise eine Belagstabilisierung auch in radialer Richtung erzielen.

Besonders bevorzugt ist dabei auch zwischen den Bremsstempeln und der Bremsbelageinheit jeweils eine Rampen-/Rollkörperanordnung ausgebildet. Besonders bevorzugt ist ferner jede der Druckflächen der wenigstens zwei oder mehr Bremsstempel an ihrer der Bremsbelageinheit zugewandten Seite mit einer Ausnehmung mit einer rampenförmigen Kontur versehen, in die jeweils ein Wälz- bzw. Rollkörper eingreift, der sich einerseits an der rampenförmigen Kontur der Druckflächen der Bremsstempel und andererseits an der Bremsbelageinheit abstützt.

Die Rampen-/Rollkörperanordnungen zwischen den Bremsstempeln und der Bremsbelageinheit dienen der Übertragung und Abstützung der Bremskraft. Sie werden daher nachfolgend "Primär-Rampen-/Rollkörperanordnungen" genannt.

Die Rampenanordnungen zwischen dem Bremsbelag und der Verbindungsplatte erhalten dagegen die Bezeichnung "Sekundär-Rampen-/Rollkörperanordnungen".

Durch die "Primär-Rampen-/Rollkörperanordnungen" wird die selbstverstärkende Bremse in einfacher Weise mit einer Nachstellvorrichtung kombiniert. Die Zustellung der Bremse in Richtung der Bremsscheibe bzw. senkrecht zur Bremsscheibe erfolgt mittels der Bremsstempel, indem deren Länge axial verändert wird. Die Zustellung in Umfangsrichtung bzw. parallel zur Scheibe erfolgt auf andere Weise, so z.B. mit einer Kurbel. Die Bremsstempel sind auch zur Nachstellung von Bremsbelagverschleiß mit nutzbar. Bei Bremsungen ergeben sich vorteilhaft verschiedenste Optionen, die nachfolgend näher erörtert werden.

Es ist zweckmäßig, wenn die Verbindungsplatte aus einem Metallblech besteht. Andere Materialen sind denkbar, da die Verbindungsplatte nicht zur Übertragung der wesentlichen Bremskräfte sondern zur Stabilisierung der Anordnung dient.

Es ist zweckmäßig, dass die Verbindungsplatte zwei Öffnungen für die beiden Bremsstempel aufweist und dass die Verbindungsplatte an den Bremsstempeln festgelegt ist, um sich mit diesen parallel zur Bremsscheibendrehachse bei Zustell- und Nachstellbewegungen synchron zu bewegen.

Vorzugsweise ist eine weitere Öffnung in der Verbindungsplatte ausgebildet, die von einem elektromotorisch angetriebenen Kurbelzapfen zum Bewegen der Bremsbelageinheit durchsetzt ist. Andere Arten eines Antriebs der Bremsbelageinheit sind ebenfalls denkbar. So ist alternativ auch ein linearer Antrieb bei weitgehend analoger Anordnung denkbar. Anstelle des Kurbelzapfens wird dabei auf die Antriebswelle ein Zahnradsegment aufgesetzt, welches in eine Zahnstange auf dem Belagrücken eingreift (hier nicht dargestellt). Bevorzugt wird jedoch der nicht lineare Antrieb eingesetzt. Denkbar sind zudem auch Hebelanordnungen zwischen Elektromotor und Bremsbelageinheit als Zuspanneinrichtung (hier nicht dargestellt).

Besonders bevorzugt weisen die Rampenanordnungen jeweils eine Ausnehmung im Verbindungsblech und eine korrespondierende Ausnehmung in der Bremsbelageinheit auf, in die ein Rollkörper eingreift.

Dabei ist es zweckmäßig, wenn eine oder jeweils beide der Ausnehmungen im Verbindungsblech oder Bremsbelag eine rampenförmige Kontur aufweisen, die zur Bremsscheibenreibfläche geneigt verläuft. Mit den rampenförmigen Konturen, die geneigt zur Bremsscheibenreibfläche verlaufen, kann im Zusammenspiel mit den Rampen an den Bremsstempeln die Selbstverstärkungswirkung realisiert werden, da die Rollkörper im Bremsfall an den Rampen auflaufen. Die wesentlichen Kräfte nehmen die Bremsstempel auf. Die Rampen in dem Verbindungsblech wirken in erster Linie stabilisierend.

Es ist zweckmäßig, wenn eine oder jeweils beide der Ausnehmungen im Verbindungsblech oder Bremsbelag eine der Rollkörpergeometrie angepasste Geometrie aufweisen.

Vorzugsweise bestehen die Rollkörper zwischen Verbindungsblech und Bremsbelageinheit aus Metall. Es ist auch denkbar, dass sie aus Metall, Keramik, Glas oder Kunststoff bestehen, da sie nur geringe Kräfte aufnehmen müssen.

Es ist zweckmäßig, wenn die Ausnehmungen in der Bremsbelageinheit und/oder der Verbindungsplatte als rillenförmige Laufbahnen ausgebildet.

Für Bremsungen in Vorwärts- und Rückwärtsfahrt sowie für Parkbremsungen ist es ferner vorteilhaft, wenn die Ausnehmungen doppelsinnig rampenförmig ausgebildet sind.

Das verstellbare Rampensystem kann auch genutzt werden, um eine zuverlässige und auch bei infolge Abkühlung schrumpfender Reibkörper selbsttätig nachstellende Parkbremse zu realisieren. Ein weiterer wesentlicher Vorteil der Erfindung ist daher darin zu sehen, dass mit der vorgeschlagenen Scheibenbremse auch eine zuverlässig wirkende Parkbremse ohne zusätzlich notwendige Betätigungskomponenten realisiert wird.

Hierzu muss der Rampenwinkel mit der größten Selbstverstärkung so bemessen sein, dass auch bei dem niedrigsten denkbaren Belagreibwert noch eine Selbstverstärkung möglich ist.

Die Steuerung der elektromechanischen Bremse erfolgt jeweils mittels einer Rechnereinheit an der Bremse, die ggf. vernetzt sind oder zum Beispiel mittels einem übergeordneten Rechner am Fahrzeug für eine oder mehrere Bremsen.

Wird beispielsweise eine Normalkraftregelung durchgeführt, die nach dem Stand der Technik als alleinige Regelung nicht für einsetzbar gehalten wird, wirkt es sich vorteilhaft aus, das beispielsweise über die Abstützung der Bremsstempel am Bremssattel diese Normalkraft sehr genau ermittelbar ist (parallele Kraft zur Längsachse der Bremsstempel, indem beispielsweise entsprechende Sensoren an den Bremsstempeln und/oder angrenzenden Elementen angeordnet werden.

Vorzugsweise ist zwischen den Bremsstempeln und der Bremsbelageinheit ebenfalls jeweils eine Rampenanordnung ausgebildet.

Es ist nicht nur denkbar, dass die Rampenanordnung als Rampen-/Rollkörperanordnung ausgebildet ist sondern die Rampenanordnung kann auch als besonders kostengünstige Rampen-/Nockenanordnung ausgebildet sein. Anstelle des Rollkörpers gleitet der kostengünstigere Nocken - z.B. eine Ausprägung im Verbindungsblech - dann an einer Rampe.

Weitere vorteilhafte Ausgestaltungen sind den übrigen Unteransprüchen zu entnehmen.

Nachfolgend wird die Erfindung unter Bezug auf die Zeichnung anhand von Ausführungsbeispielen näher beschrieben. Es zeigt:
- Fig. 1: eine Skizze, welche den prinzipiellen Aufbau einer selbstverstärkenden Scheibenbremse veranschaulicht;
- Fig. 2a-d: einen Schnitt durch den Bereich einer zuspannseitigen Bremsbelageinheit einer erfindungsgemäßen Scheibenbremse und Ausschnitte, die Varianten eines Teilbereiches der Ansicht der Fig. 2a zeigen;
- Fig. 3: eine Ansicht einer Verbindungsplatte; und
- Fig. 4: eine weitere Skizze zur Veranschaulichung der prinzipiellen Funktion der Scheibenbremse aus Fig. 1.

Bevorzugt bauen die erfindungsgemäßen Scheibenbremsen auf einem Festsattelkonzept auf, bei dem ein ein- oder mehrteiliger Bremssattel 1 (auch Bremsengehäuse genannt) relativ zu einer Bremsscheibe 2 unbeweglich an einer Radachse befestigt ist.

Das Wirkprinzip und die beschriebenen Merkmale sind prinzipiell auch für andere Bremsenbauarten, wie z.B. Schiebesattel- oder Schwenksattelbremsen, anwendbar. Lediglich der die Bremsbetätigung beinhaltende Sattelkopf der mechanisch/pneumatisch betätigten Basisbremse wird ersetzt durch die elektromechanische Zuspannvorrichtung mit Selbstverstärkung.

Eine Festsattelbremse mit pneumatisch betätigter Zuspanneinrichtung dieser Art zeigen z.B. die DE 36 10 569 A1, die DE 37 16 202 A1 oder die EP 0 688 404 A1. Eine Festsattelbremse mit elektromotorischer Nachstellung zeigt die WO 02/14 708 A1. Eine oder mehrere elektromotorische Nachtstelleinrichtungen können bei den vorgeschlagenen Ausführungsbeispielen - wenn gewünscht - jeweils reaktionsseitig angeordnet werden. Derart sind auf einfache Weise Festsattelkonzepte mit kleinem Bewegungsweg für die Bremsscheibe realisierbar. Die Erfindung schafft damit auf einfache Weise auch eine Scheibenbremse, die als Festsattelbremse ausgebildet ist und eine oder zwei elektromechanische Nachstellvorrichtungen auf der Reaktionsseite der Bremse aufweist und eine elektromechanische Zustellvorrichtung, vorzugsweise in selbstverstärkender Bauart auf der Zuspannseite.

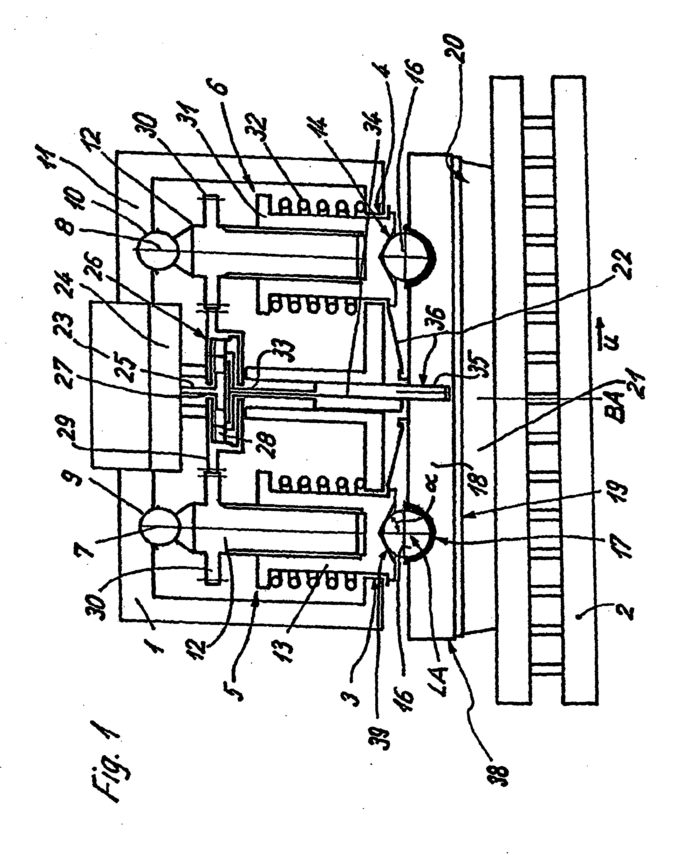

In Fig. 1 ist der Bremssattel. 1 lediglich in seinem zuspannseitigen Bereich angedeutet. In der Praxis umgreift er vorzugsweise rahmenartig den oberen Umfangsbereich der Bremsscheibe und ist an einem (hier nicht zu erkennenden Achsflansch) unbeweglich befestigt.

Der Bremssattel 1 weist an seiner der Bremsscheibe 2 mit einer Bremsscheibendrehachse zugewandten Seite eine oder mehrere, vorzugsweise zwei Öffnungen 3, 4 und eine korrespondierende Anzahl von Bremsstempeln 5, 6 (hier zwei) auf, die parallel zur Bremsscheibenachse BA ausgerichtet sind.

Nach Fig. 1 bis 4 sind jeweils zwei Bremsstempel 5, 6 parallel zueinander angeordnet.

Die beiden Bremsstempel 5, 6 bzw. Nachstellkolben stützen sich jeweils direkt oder über zwischengeschaltete Elemente; hier Gleitlagerschalen 9, 10; an der bremsscheibenabgewandten Rückwand 11 des Bremssattels ab. Als Lagereinrichtungen werden vorzugsweise Kugeln, 7, 8 mit Gleitlagerschalen 9 eingesetzt. Die Lagereinrichtungen sind derart ausgelegt, dass sie eine Drehung der Bremsstempel 5, 6 bzw. Nachstellkolben um ihre eigene Längsachse LA erlauben.

Dabei sind jeweils im Bremsstempel 5, 6 und im Bremssattel kugelsegmentartige (kalottenartige) Ausnehmungen ausgebildet, von denen in eine (hier in die im Bremssattel) die Gleitlagerschalen 9, 10 eingesetzt ist, so dass sich die Kugeln 7, 8 relativ zur Gleitlagerschale drehen können.

Alternativ können die Kugeln 7, 8 auch als kugelförmige Ansätze an den zum Bremssattel gewandten Enden der Bremsstempel 5, 6 ausgebildet sein (hier nicht dargestellt), die dann in korrespondierende Ausnehmungen im Bremssattel mit Gleitlagerschalen eingreifen. Denkbar sind anstelle der Kugeln und Ausnehmungen auch ebene Gleitlager oder ringförmige Lager oder dgl.. (hier nicht dargestellt).

Die Bremsstempel 5, 6 weisen jeweils eine mit einem Außengewinde versehene Spindel 12 auf, auf der eine hülsenartige Mutter 13 mit einem korrespondierenden Innengewinde verdrehbar angeordnet ist. Dieses Gewinde kann je nach Auslegung nicht selbsthemmend oder selbsthemmend sein.

Die Muttern 13 weisen an ihrer von der Bremsscheibe abgewandten Seite einen Flansch 31 auf, wobei zwischen dem Flansch 31 und der Innenwandung des Bremssattels 1 hier jeweils Druckfedern 32 wirken, welche die Mutter 13 konzentrisch umfassen und auf den Flansch eine vorgegebene Kraft ausüben bzw. den Flansch 31 relativ zur Bremssattel-Innenwand vorspannen. Alternativ wird die gesamte Mechanik gegen die Druckplatte verspannt.

Nach Fig. 1 bis 4 ist die Mutter 13 jedes Bremsstempels 5, 6 an der zur Bremsscheibe zugewandten Seite angeordnet und die Spindel 12 an der zum Bremssattelinneren gewandten Seite. Eine umgekehrte Anordnung wäre auch denkbar (hier nicht dargestellt).

Durch Verschrauben der Mutter 13 auf der Spindel kann die axiale Länge jedes einzelnen derart ausgebildeten Bremsstempels 5, 6 - beispielsweise zum Ausgleich von Bremsbelagverschleiß und beim Anlegen der Beläge an die Bremsscheibe 2 - verstellt werden.

An ihrer der Bremsscheibe zugewandten Seite, also an ihren Druckflächen, sind die Bremsstempel 5, 6, hier die Muttern 13, jeweils mit einer rampenartigen Ausnehmung oder Kontur 14 (Rampe) versehen, deren tiefste Stelle vorzugsweise im Bereich der Längsachse der Bremsstempel liegt. In die Ausnehmungen 14 greifen jeweils Rollkörper 16 ein, die hier in bevorzugter Ausgestaltung als Kugeln 16 ausgebildet sind. Die tiefste Stelle der Ausnehmungen 14 ist jeweils vorteilhaft so ausgestaltet, dass die Rollkörper 16, insbesondere Kugeln, an der tiefsten Stelle verrastet sind und nur gegen eine Mindestrastkraft aus der Vertiefung lösbar sind, was eine definierte Ruhezustand sichert.

Alternativ wären nach einer alternativen Ausführungsform auch z.B. zylindrische oder auf sonstige Weise geformte Rollkörper (z.B. Tonnen) denkbar, die dann z.B. auf einer rinnenartigen Ausnehmung in den Bremsstempeln abrollen würden.

Die Rollkörper 16 greifen an ihren von der Bremsscheibe abgewandten Seiten in je nach Ausgestaltung der Rollkörper ausgebildete, hier kalottenförmige Gleitlagerschalen 17, die in Ausnehmungen korrespondierender Formgebung in einer Druckplatte 18 eingesetzt sind, die an der Trägerplatte 19 eines zuspannseitigen Bremsbelages 20 mit Bremsbelagmaterial 21 anliegt, der im Bremssattel 1 parallel zur Bremsscheibendrehachse BA und in Umfangsrichtung U (bzw. Tangential bzw. parallel zur Tangentialen) relativ zur Bremsscheibe 2 beweglich angeordnet ist.

Eine Klammerfeder 22 zwischen Druckplatte 18 und Muttern 13 hält die Druckplatte 18 unter Vorspannung an den Muttern 13. Alternativ ist es auch denkbar, die Druckplatte auf andere Weise, z.B. am Gehäuse (Sattel) zu verspannen).

Zum Antrieb der Bremse dient ein elektrischer Antriebsmotor 23, dem vorzugsweise ein Untersetzungsgetriebe 24 nachgeordnet ist, dessen Abtriebswelle 25 auf ein weiteres Getriebe 26, insbesondere ein Planetengetriebe wirkt, das mittig zwischen den Spindeln angeordnet ist.

Dabei treibt die Abtriebswelle 25 ein Sonnenrad 27 des Planetengetriebes 26 , welches Planetenräder 28 mitnimmt. Die Planetenräder 28 kämmen (hier nicht detailliert dargestellt) mit dem Sonnenrad 27 und einem innen- und außenverzahnten Ring 29. Je nach Schaltzustand (Schaltbarkeit hier nicht dargestellt) setzen sie entweder den Planetenstern 33 oder den Ring 29 in Drehung. Der Ring 29 kämmt mit seiner Außenverzahnung mit Zahnrädern 30, die auf die Spindeln 12 aufgesetzt oder an diese angeformt sind.

Zum selbsttätigen Umschalten des Antriebs (z.B. ein Elektromotors) kann ein federbelasteter Kugelrastmechanismus vorgesehen sein (hier nicht dargestellt). Der Umschaltvorgang kann auch auf andere Weise realisiert werden (z.B. elektromagnetisch).

In axialer Verlängerung des Planetensterns 33 ist eine hier zylindrisch ausgebildete und parallel zur Bremsscheibenachse angeordnete Kurbel 34 vorgesehen, die an ihrer zur Bremsscheibe 2 gewandten Seite mit einem außermittig (exzentrisch) ausgebildeten, ebenfalls parallel zur Bremsscheibenachse BA parallel ausgerichteten Kurbelzapfen 35 in eine korrespondierende Öffnung 36 in einer Bremsbelageinheit eingreift, wobei die Öffnung 36 die z.B. einen zum Querschnitt des Kurbelzapfens 35 korrespondierenden Querschnitt aufweist oder aber z.B. kulissen- , insbesondere langlochartig ausgebildet ist (hier z.B. senkrecht zur Bildebene).

Im Ausführungsbeispiel der Fig. 1 besteht die Betätigungseinrichtung bzw. Zuspannvorrichtung aus den zwei, zum Zwecke der Verschleißnachstellung längenveränderlichen Nachstellkolben bzw. Bremsstempeln 5, 6, welche in ihrer der Bremsscheibe 2 zugewandten Druckfläche die Ausnehmungen 14 nach Art von Rampenkonturen aufweisen, an denen die Rollkörper 16 ablaufen, welche die von der Bremse erzeugte Zuspannkraft auf die Bremsbelageinheit bzw. auf die auf den Bremsbelag aufliegende Druckplatte übertragen.

In der Druckfläche der Bremsbelageinheit bzw. der Druckplatte 18 sind die Rollkörper 16 über ein entgegengesetzt gestaltetes Rampenprofil (hier nicht dargestellt) oder (bevorzugt, da die Rollkörper besonders sicher geführt sind; hier dargestellt) in dem Gleitlagerbett (Gleitlagerschalen 17) aufgenommen.

Die Bremsbelageinheit 38, hier bestehend aus der ein- oder mehrteiligen Kombination von Bremsbelag 20 und Druckplatte 18, wird federnd so gegen die Bremsstempel 5, 6 gedrückt, dass die dazwischen angeordneten Rollkörper 16 zwischen der Bremsbelageinheit und den Bremsstempel elastisch eingespannt sind.

Die Betätigung der Bremse erfolgt nach einem Anlegevorgang des Bremsbelages 20 an die Bremsscheibe durch ein Verschieben der Druckplatte nebst Bremsbelag 20 parallel zur Reibfläche der Bremsscheibe in Drehrichtung bzw. Umfangsrichtung derselben.

Diese Verschiebung wird vorzugsweise durch den Kurbeltrieb 35, 36 bewirkt, der mit einem Abtriebs- und hier Kurbelzapfen 35 etwa mittig an der Druckplatte 18 der Bremsbelageinheit 18, 20 angreift und parallel zur Rotationsachse der Bremsscheibe im Zuspanngehäuse - Bremssattel - 1 gelagert wird.

Die Betätigung des Kurbeltriebes erfolgt über den elektrischen Antrieb, z.B. den Elektromotor 23 mit nachgeschaltetem Getriebe 24.

Fig. 1 zeichnet sich durch einen konstanten Rampenwinkel α > 0° der Rampen relativ zur Bremsscheibenreibfläche aus. Damit wird ein besonders einfacher konstruktiver Aufbau erreicht, der sich durch einen robusten Aufbau, eine gute Funktionssicherheit und niedrige Herstellkosten auszeichnet. Insbesondere kann ein Elektromotor 23 erstaunlich geringer Ausgangsleistung eingesetzt werden. Dabei bieten sich die Kugeln 16 als kostengünstige Rollkörper an, die sich quasi selbst in der Rampenfläche ausrichten. Zur Erhöhung der Tragfähigkeit können die Kugeln auch in angepassten Laufrillen ablaufen. Eine Variante mit Rollen als Rollkörpern 16 würde dagegen eine besonders geringe Hysterese aufweisen (hier nicht dargestellt).

Es sind auch Varianten denkbar, bei denen der Rampenwinkel der Ausnehmungen 14 in Umfangsrichtung um die Längsachse der Nachstellmuttern bzw. Bremskolben 5, 6 nicht konstant ist sondern veränderlich, so dass je nach Drehstellung der Muttern 13 ein verschieden steiler Rampenwinkel α vorliegt. Hierzu können für die verschiedenen Drehstellungen Kugellaufrillen mit unterschiedlicher Steigung angeordnet sein (hier nicht dargestellt).

Bei Bremsungen bewegen sich die Bremsbeläge 20 mit einer Bewegungskomponente in Umfangsrichtung bzw. parallel zur Bremsscheibenreibfläche.

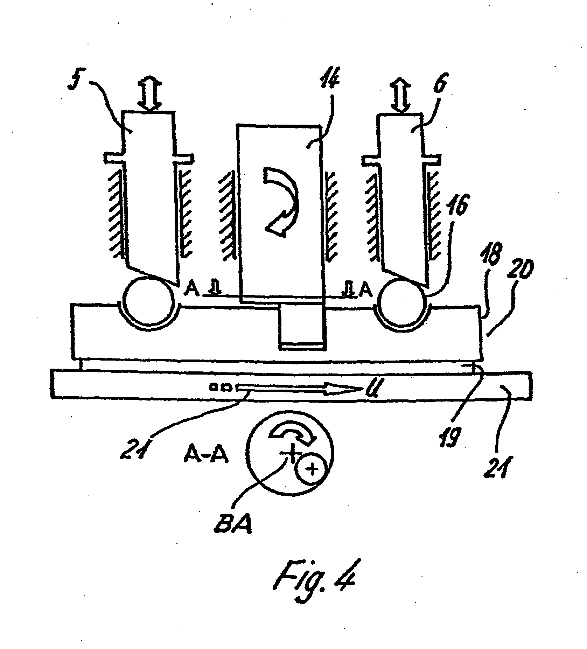

Dabei rollen die Rollkörper 14 auf den Rampenflächen der Ausnehmungen 14 - den Rampen 39 - aufwärts und verschieben dabei den Bremsbelag bzw. hier die Bremsbelageinheit gegen die Bremsscheibe. Durch die dabei entstehende Anpresskraft wird die Bremswirkung hervorgerufen. Die Umfangsverschiebung kann dabei ausschließlich durch die Reibkraft bewirkt oder durch ein Betätigungselement zusätzlich beeinflusst werden (siehe auch Fig. 4 als Prinzipskizze).

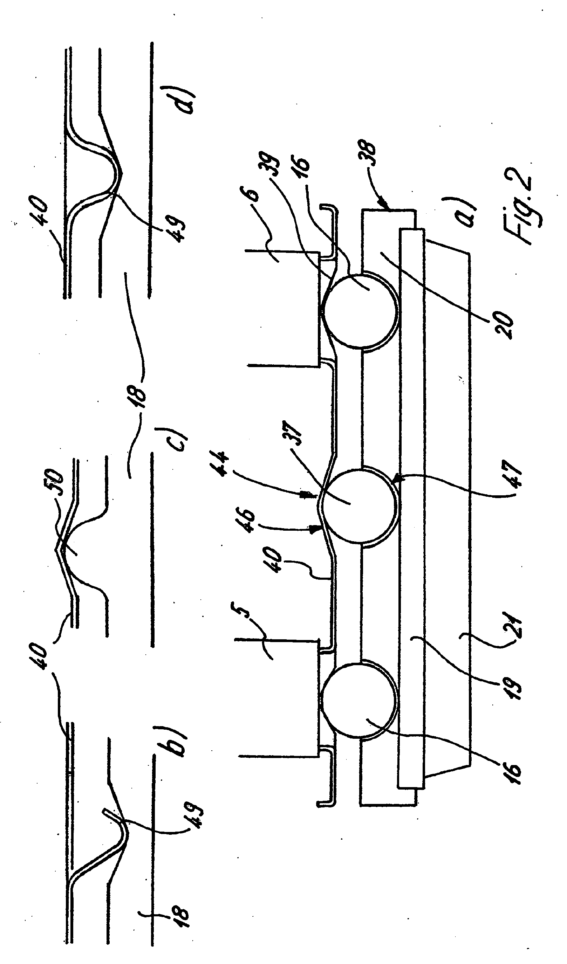

Die selbstverstärkende Scheibenbremse der Fig. 1 ist robust und zuverlässig und erreicht mit einfachen Mitteln einen hohen Selbstverstärkungsgrad. Fig. 2 ergänzt diese Konstruktion um eine Maßnahme zur effizienten radialen Stabilisierung des Bremsbelages.

Nach Fig. 2 sind die beiden Druckstempel bzw. Bremsstempel 5, 6 mittels einer Verbindungsplatte 40 miteinander verbunden, welche sie jeweils mit ihren Endbereichen, in denen die rampenförmigen Ausnehmungen angebracht sind, durchgreifen.

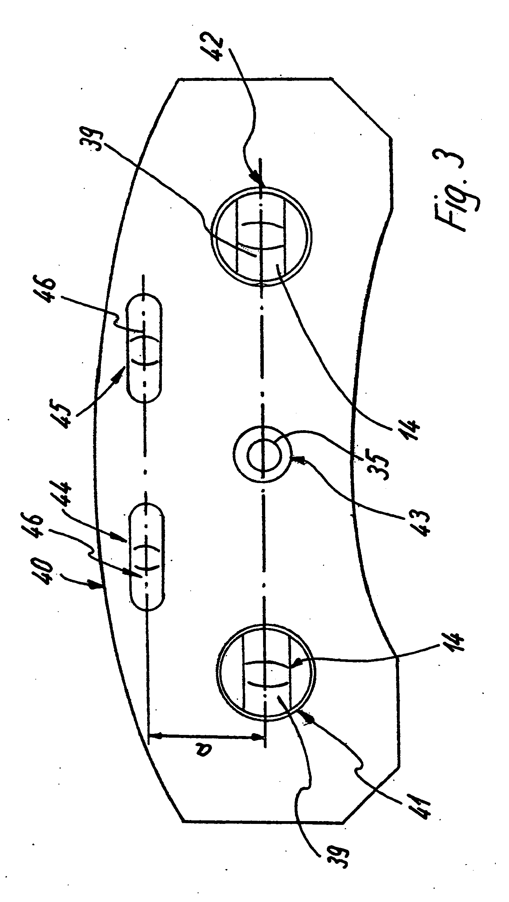

Die Verbindungsplatte 40 besteht vorzugsweise aus einem dünnen Metallblech. Sie weist (siehe auch Fig. 3) zwei Öffnungen 41, 42 für die beiden Bremsstempel 5, 6 auf, an denen sie festgelegt sein kann, um sich mit diesen parallel zur Bremsscheibendrehachse bei Zustell- und Nachstellbewegungen synchron zu bewegen.

Eine weitere Öffnung 43 zwischen den beiden Öffnungen 41, 42 wird im montierten Zustand von dem Kurbelzapfen 35 durchsetzt.

Erfindungsgemäß wird das Problem der radialen Stabilisierung des Bremsbelages 20 bzw. der Bremsbelageinheit 38 dadurch gelöst, dass zwischen der Bremsbelageinheit 38 und der Verbindungsplatte wenigstens eine oder mehrere weitere Rampenanordnungen 44 angeordnet sind, die nach einer Variante als Rampen-/Rollkörperanordnungen 44 ausgebildet sind (Fig. 2a).

Es wäre auch denkbar, anstelle der Rollkörper hier die Rampenanordnung mit Nocken 50 (z.B. halbkugelartig oder als Federelemente 49 ausgebildet) zu realisieren, die an entsprechenden Rampen 48 gleiten (Fig. 2b -2c). Je nach Wunsch werden die Rampen 48 an der Verbindungsplatte 40 oder an der Bremsbelageinheit und korrespondierend die Nocken 50 am jeweils anderen Bauteil angeordnet. Eine derartige Anordnung ist besonders kostengünstig und auch leicht montierbar, da die zusätzlichen Rollkörper eingespart werden. Die Nocken übernehmen die Führung. Da an den Sekundärrampen nur geringe Stabilisierungskräfte übertragen werden, aber nicht die wesentlichen Bremskräfte abzustützen sind, ist die auftretende Reibung gering und eine derart vereinfachte Variante überhaupt erst realisierbar. Die Nocken könnten z.B. einfachste durch Ausprägungen in der Verbindungsplatte realisiert werden.

In Fig. 2 ist eine und in Fig. 3 sind beispielhaft zwei dieser Rampen-/Rollkörperanordnungen 44, 45 vorgesehen.

Die Rampen-/Rollkörperanordnungen 44, 45 werden dadurch gebildet, dass neben den Öffnungen 41 - 43 in der Verbindungsplatte zudem noch wenigstens eine oder mehr - hier zwei Ausnehmungen 46 ausgebildet sind, deren Kontur auf der dem Belag 20 zugewandten Seite vorzugsweise im wesentlichen oder vollständig der Kontur der Ausnehmungen 14 in den Bremsstempeln entspricht, wobei in die Ausnehmungen 46 in Fig. 2a Rollkörper 37 eingesetzt sind, die ferner in Ausnehmungen 47 in der Bremsbelageinheit 39 eingreifen (die auch rampenartig ausgestaltet sein können).

Die weiteren Rampen-/Rollkörperanordnungen 44, 45 sorgen für eine gute radiale Stabilisierung. Ihre optimale Position kann beispielsweise im Versuch bestimmt werden.

Aufgrund der vorzugsweise dünnwandigen Ausbildung des Verbindungsplatte 40 können diese "Sekundär-Rampen-/Rollkörperanordnungen" keine hohen Bremskräfte übertragen. Sie können daher auch kleiner dimensioniert werden als die Primär-Rampen-/Rollkörperanordnungen in den Bremsstempeln 5, 6.

Es ist daher nicht zwingend notwendig, die Rollkörper 37 im Belag in Gleitlagerschalen zu betten. Es ist zudem alternativ möglich, Rampen auch oder nur in der Bremsbelageinheit 39 vorzusehen und die Rollkörper 37 in der Verbindungsplatte 40 auf andere geeignete Weise festzulegen, z.B. in einer kalottenförmigen Ausnehmung.

Die niedrigeren zu übertragenden Kräfte erlauben auch den Einsatz eines weniger festen Materials für die Rollkörper 37. So sind Rollkörper 37 aus Metall, Keramik, Glas oder Kunststoff denkbar. Besonders bevorzugt werden korrosionsbeständige Materialen eingesetzt, welche es erlauben, die "Sekundär-Rampen-/Rollkörperanordnungen" ohne Abdichtung zur Verhinderung von Korrosion anzuordnen.

### Bezugszeichen

- Bremssattel: 1
- Bremsscheibe: 2
- Öffnungen: 3, 4
- Bremsstempel: 5,6
- Lagerkugeln: 7, 8
- Gleitlagerschalen: 9, 10
- Rückwand: 11
- Spindel: 12
- Mutter: 13
- rampenartige Ausnehmung: 14
- Rollkörper: 16
- Gleitlagerschalen: 17
- Ausnehmungen: 15
- Druckplatte: 18
- Trägerplatte: 19
- Bremsbelag: 20
- Bremsbelagmaterial: 21
- Klammerfeder: 22
- Antriebsmotor: 23
- Untersetzungsgetriebe: 24
- Abtriebswelle: 25
- Getriebe: 26
- Sonnenrad: 27
- Planetenräder: 28
- Ring: 29
- Zahnräder: 30
- Flansch: 31
- Druckfedern: 32
- Planetenstern: 33
- Kurbel: 34
- Kurbelzapfen: 35
- Öffnung: 36
- Rollkörper: 37
- Bremsbelageinheit: 38
- Rampen: 39
- Verbindungsplatte: 40
- Öffnung: 41,42,43
- Rampen-/Rollkörperanordnungen: 44, 45
- Ausnehmungen: 46,47
- Rampen: 48
- Federelemente: 49
- Nocken: 50
- Rampenwinkel: α
- Längsachse: LA
- Unfangsrichtung: U
- Bremsscheibenachse: BA

## Patentansprüche

1. Scheibenbremse in selbstverstärkender Bauart, bei der eine von einem Aktuator aufgebrachte Betätigungskraft mit Hilfe einer zwischen Aktuator und Bremsbelag angeordneten Zuspannvorrichtung, die eine Selbstverstärkungseinrichtung aufweist, verstärkbar ist, mit folgenden Merkmalen:
a) einem Bremssattel (1) oder -rahmen,
b) der Zuspannvorrichtung zum Zuspannen wenigstens einer Bremsbelageinheit (38) auf der einen Seite einer Bremsscheibe (2) unter Durchführung einer Zuspannbewegung der Bremsbelageinheit (38) zur Bremsscheibe (2), wobei die Zuspannbewegung in wenigstens eine parallel und wenigstens eine relativ zur Bremsscheibendrehachse (BA) tangential verlaufende Bewegungskomponente (Richtung U) zerlegbar ist,
c) wenigstens einem elektromotorischen Antrieb (23) als Aktuator zum Betätigen der Zuspannvorrichtung,
d) wobei die Zuspannvorrichtung ferner wenigstens zwei oder mehr Bremsstempel (5, 6) aufweist, der auf die Bremsbelageinheit (38) einwirken,
e) die beiden Bremsstempel (5, 6) mittels einer Verbindungsplatte (40) miteinander verbunden sind,
**dadurch gekennzeichnet, dass**
f) die beiden Bremsstempel (5, 6) die Verbindungsplatte (40) jeweils mit ihren Endbereichen, in denen rampenförmige Ausnehmungen (14) angebracht sind, durchgreifen,
g) wobei zwischen den Bremsstempeln (5, 6) und der Bremsbelageinheit (38) jeweils eine Rampen-/Rollkörperanordnung (44) ausgebildet ist, und
h) wobei im Bereich neben den Bremsstempeln (5, 6) zwischen der Bremsbelageinheit und der Verbindungsplatte (40) wenigstens eine oder mehrere weitere Rampenanordnungen ausgebildet ist/sind

2. Scheibenbremse nach Anspruch 1, **dadurch gekennzeichnet, dass** die Rampenanordnung im Bereich neben den Bremsstempeln (5, 6) als Rampen-/Rollkörperanordnung (44) ausgebildet ist.

3. Scheibenbremse nach Anspruch 1, **dadurch gekennzeichnet, dass** die Rampenanordnung im Bereich neben den Bremsstempeln (5, 6) als Rampen-/Nockenanordnung ausgebildet ist.

4. Scheibenbremse nach Anspruch 3, **dadurch gekennzeichnet, dass** die Rampen-/Nockenanordnung einen Nocken (50) umfasst, der an der Rampe gleitet.

5. Scheibenbremse nach Anspruch 4, **dadurch gekennzeichnet, dass** der Nocken (50) als Federelement (49) ausgebildet ist.

6. Scheibenbremse nach einem der vorstehenden Ansprüche, **dadurch gekennzeichnet, dass** jede der Druckflächen der wenigstens zwei oder mehr Bremsstempel (5, 6) an ihrer der Bremsbelageinheit zugewandten Seite mit einer Ausnehmung (14) mit einer rampenförmigen Kontur versehen ist, in die jeweils ein Wälz- bzw. Rollkörper (16) eingreift, der sich einerseits an der rampenförmigen Kontur der Druckflächen der Bremsstempel (5, 6) und andererseits an der Bremsbelageinheit abstützt.

7. Scheibenbremse nach einem der vorstehenden Ansprüche, **dadurch gekennzeichnet, dass** die Verbindungsplatte (40) aus einem Metallblech besteht.

8. Scheibenbremse nach einem der vorstehenden Ansprüche, **dadurch gekennzeichnet, dass** die Verbindungsplatte (40) zwei Öffnungen (41, 42) für die beiden Bremsstempel (5, 6) aufweist.

9. Scheibenbremse nach einem der vorstehenden Ansprüche, **dadurch gekennzeichnet, dass** die beiden Bremsstempel (5, 6) sich am Bremssattel (1) abstützen und axial längenveränderlich ausgestaltet sind.

10. Scheibenbremse nach einem der vorstehenden Ansprüche 8 bis 10, **dadurch gekennzeichnet, dass** die Verbindungsplatte (40) an den Bremsstempeln (5, 6) festgelegt ist, um sich mit diesen bei Zustell- und Nachstellbewegungen synchron zu bewegen.

11. Scheibenbremse nach einem der vorstehenden Ansprüche, **dadurch gekennzeichnet, dass** eine weitere Öffnung (43) in der Verbindungsplatte ausgebildet ist, die von einem elektromotorisch angetriebenen Kurbelzapfen (34) zum Bewegen der Bremsbelageinheit durchsetzt ist.

12. Scheibenbremse nach einem der vorstehenden Ansprüche, **dadurch gekennzeichnet, dass** die Rampen-/Rollkörperanordnungen (44, 45) jeweils eine Ausnehmung (46) im Verbindungsblech (40) und eine korrespondierende Ausnehmung (47) in der Bremsbelageinheit (38) aufweisen, in die jeweils ein Rollkörper (37) eingreift.

13. Scheibenbremse nach Anspruch 12, **dadurch gekennzeichnet, dass** eine oder jeweils beide der Ausnehmungen (46, 47) im Verbindungsblech (40) oder in der Bremsbelageinheit (37) eine rampenförmige Kontur aufweisen, die zur Bremsscheibenreibfläche geneigt ausgerichtet ist.

14. Scheibenbremse nach einem der vorstehenden Ansprüche 12 oder 13, **dadurch gekennzeichnet, dass** eine oder jeweils beide der Ausnehmungen (46, 47) im Verbindungsblech (40) oder Bremsbelag eine der Rollkörpergeometrie angepasste Geometrie aufweist.

15. Scheibenbremse nach einem der vorstehenden Ansprüche 12 bis 14, **dadurch gekennzeichnet, dass** die Ausnehmungen (46, 47) in der Bremsbelageinheit (38) und/oder der Verbindungsplatte (40) als rillenförmige Laufbahnen ausgebildet sind.

16. Scheibenbremse nach einem der vorstehenden Ansprüche, **dadurch gekennzeichnet, dass** die Rollkörper (37) oder Rollkörperanordnung (44) aus Metall bestehen.

17. Scheibenbremse nach einem der vorstehenden Ansprüche, **dadurch gekennzeichnet, dass** die Rollkörper (37) oder Rollkörperanordnung (44) aus Metall, Keramik, Glas oder Kunststoff bestehen.

18. Scheibenbremse nach einem der vorstehenden Ansprüche, **dadurch gekennzeichnet, dass** die Ausnehmungen (14, 46 oder 47) doppelsinnig rampenförmig oder kegelflächenförmig ausgebildet sind.

19. Scheibenbremse nach Anspruch 1, **dadurch gekennzeichnet, dass** sie als Festsattelbremse ausgebildet ist und eine oder zwei elektromechanische Nachstellvorrichtungen auf der der Zuspannvorrichtung gegenüberliegenden Reaktionsseite der Bremse aufweist.

20. Scheibenbremse nach einem der vorstehenden Ansprüche, **dadurch gekennzeichnet, dass** die Bremsstempel (5, 6) als Druckstempel ausgeführt sind.

21. Scheibenbremse nach einem der vorstehenden Ansprüche, **dadurch gekennzeichnet, dass** die Bremsbelageinheit (38) aus einem Bremsbelag (20) und ggf. einer Druckplatte (18) besteht.

## Claims

1. A self-energizing disk brake in which an actuation force applied by an actuator can be boosted by means of an application device which is arranged between the actuator and a brake lining and which has a self-energizing device, having the following features:
a) a brake caliper (1) or frame,
b) the application device for applying at least one brake lining unit (38) to the one side of a brake disk (2) by carrying out an application movement of the brake lining unit (38) with respect to the brake disk (2), with it being possible for the application movement to be broken down into at least one movement component parallel to the brake disk rotational axis (BA) and at least one movement component (direction U) which runs tangentially relative to the brake disk rotational axis (BA),
c) at least one electromotive drive (23) as an actuator for actuating the application device,
d) with the application device also having at least two or more brake plungers (5, 6) which act on the brake lining unit (38),
e) the two brake plungers (5, 6) are connected to one another by means of a connecting plate (40),
**characterized in that**
f) the two brake plungers (5, 6) extend through the connecting plate (40) in each case with their end regions in which the ramp-shaped recesses (14) are formed,
g) with in each case one ramp/rolling-body arrangement (44) being formed between the brake plungers (5, 6) and the brake lining unit (38),
h) with at least one or more further ramp arrangements being formed in the region adjacent to the brake plungers (5, 6) between the brake lining unit and the connecting plate (40).

2. The disk brake as claimed in claim 1,
**characterized in that** the ramp arrangement in the region adjacent to the brake plungers (5, 6) is embodied as a ramp/rolling-body arrangement (44).

3. The disk brake as claimed in claim 1,
**characterized in that** the ramp arrangement in the region adjacent to the brake plungers (5, 6) is embodied as a ramp/cam arrangement.

4. The disk brake as claimed in claim 3,
**characterized in that** the ramp/cam arrangement comprises a cam (50) which slides on the ramp.

5. The disk brake as claimed in claim 4,
**characterized in that** the cam (50) is embodied as a spring element (49).

6. The disk brake as claimed in one of the preceding claims, **characterized in that** each of the pressure surfaces of the at least two or more brake plungers (5, 6) is provided on its side facing toward the brake lining unit with a recess (14) having a ramp-shaped contour into which engages in each case one rolling body (16) which is supported at one side against the ramp-shaped contour of the pressure surfaces of the brake plunger (5, 6) and at the other side against the brake lining unit.

7. The disk brake as claimed in one of the preceding claims, **characterized in that** the connecting plate (40) is composed of a metal plate.

8. The disk brake as claimed in one of the preceding claims, **characterized in that** the connecting plate (40) has two openings (41, 42) for the two brake plungers (5, 6).

9. The disk brake as claimed in one of the preceding claims, **characterized in that** the two brake plungers (5, 6) are supported on the brake caliper (1) and are designed so as to be axially variable in length.

10. The disk brake as claimed in one of claims 8 to 10, **characterized in that** the connecting plate (40) is fixed to the brake plungers (5, 6) in order to move synchronously with the latter during application and adjustment movements.

11. The disk brake as claimed in one of the preceding claims, **characterized in that** a further opening (43) is formed in the connecting plate, through which further opening extends an electromotively driven crank pin (34) for moving the brake lining unit.

12. The disk brake as claimed in one of the preceding claims, **characterized in that** the ramp/rolling-body arrangements (44, 45) have in each case one recess (46) in the connecting plate (40) and one corresponding recess (47) in the brake lining unit (38), into which recess in each case one rolling body (37) engages.

13. The disk brake as claimed in claim 12,
**characterized in that** one or in each case both of the recesses (46, 47) in the connecting plate (40) or in the brake lining unit (38) have a ramp-shaped contour which is aligned obliquely with respect to the brake disk friction surface.

14. The disk brake as claimed in one of claims 12 or 13, **characterized in that** one or in each case both of the recesses (46, 47) in the connecting plate (40) or brake lining have a geometry which is matched to the rolling body geometry.

15. The disk brake as claimed in one of claims 12 to 14, **characterized in that** the recesses (46, 47) in the brake lining unit (38) and/or in the connecting plate (40) are formed as groove-shaped raceways.

16. The disk brake as claimed in one of the preceding claims, **characterized in that** the rolling bodies (37) or rolling body arrangement (44) are composed of metal.

17. The disk brake as claimed in one of the preceding claims, **characterized in that** the rolling bodies (37) or rolling body arrangement (44) are composed of metal, ceramic, glass or plastic.

18. The disk brake as claimed in one of the preceding claims, **characterized in that** the recesses (14, 46 or 47) are embodied in the form of dual-direction ramps or conical surfaces.

19. The disk brake as claimed in claim 1,
**characterized in that** said disk brake is embodied as a fixed-caliper brake and has one or two electromechanical adjusting devices on the reaction side, which is situated opposite the application device, of the brake.

20. The disk brake as claimed in one of the preceding claims, **characterized in that** the brake plungers (5, 6) are embodied as pressure plungers.

21. The disk brake as claimed in one of the preceding claims, **characterized in that** the brake lining unit (38) is composed of a brake lining (20) and if appropriate a pressure plate (18).

## Revendications

1. Frein à disque en conception à renfort automatique, dans lequel un effort d'actionnement appliqué par un acteur est renforçable moyennant un dispositif de serrage de frein disposé entre ledit acteur et la garniture de frein, qui renferme un moyen de renfort automatique, présentant les caractéristiques suivantes :
a) un étrier ou cadre de frein (1),
b) ledit dispositif de serrage de frein à serrer au moins une unité à garniture de frein (38) d'un côté d'un disque de frein (2), en réalisant un mouvement de serrage de ladite unité à garniture de frein (38) vers ledit disque de frein (2), au mouvement de serrage de frein étant apte à être décomposé en au moins un composant de mouvement s'étendant en parallèle et en au moins un composant de mouvement (direction I) s'étendant tangentiellement relativement à l'axe de révolution du disque de frein (BA),
c) au moins un moyen d'entraînement électromoteur (23) en tant que l'acteur à actionner ledit dispositif de serrage de frein,
d) dans lequel ledit dispositif de serrage de frein comprend au plus au moins deux ou plus vérins de frein (5, 6) actionnant sur ladite unité à garniture de frein (8),
e) auxdits deux vérins de frein (5, 6) étant reliés l'un à l'autre moyennant une plaque de jonction (40),
**caractérisé en ce que**
f) chacun desdits deux vérins de frein (5, 6) passe à travers ladite plaque de jonction (40) par ses deux zones terminales, dans lesquelles sont formées des creux en rampe (14),
g) à un groupe à rampe/corps de roulement (44) respectif étant formé entre lesdits vérins de frein (5, 6) et ladite unité à garniture de frein (38), et
h) à au moins un ou plusieurs groupe(s) additionnel(s) étant formé(s) dans la zone à côté lesdits vérins de frein (5, 6) entre ladite unité à garniture de frein et ladite plaque de jonction (40).

2. Frein à disque selon la revendication 1, **caractérisé en ce que** ledit groupe à rampe est formé dans la zone à côté lesdits vérins de frein (5, 6) en tant que ledit groupe à rampe/corps de roulement (44).

3. Frein à disque selon la revendication 1, **caractérisé en ce que** ledit groupe à rampe dans la zone à côté desdits vérins de frein (5, 6) est configuré sous forme de groupe à rampe/came.

4. Frein à disque selon la revendication 3, **caractérisé en ce que** ledit groupe à rampe/came comprend une came (50) glissant à la rampe.

5. Frein à disque selon la revendication 4, **caractérisé en ce que** ladite came (50) est configurée sous forme d'un élément à ressort (49).

6. Frein à disque selon une quelconque des revendications précédentes, **caractérisé en ce que** chacune des aires de pression des au moins deux ou plus vérins de frein (5, 6) est pourvue, de son côté en face de ladite unité à garniture de frein, d'un creux (14) ayant un contour en rampe, dans lequel s'engrène un corps roulant ou respectivement de roulement (16), qui s'appuie, d'un côté, audit contour en rampe des aires de pression desdits vérins de frein (5, 6) et, d'autre côté, à ladite unité à garniture de frein.

7. Frein à disque selon une quelconque des revendications précédentes, **caractérisé en ce que** ladite plaque de jonction (40) consiste en une tôle métallique.

8. Frein à disque selon une quelconque des revendications précédentes, **caractérisé en ce que** ladite plaque de jonction (40) présente deux ouvertures (41, 42) pour lesdits deux vérins de frein (5, 6).

9. Frein à disque selon une quelconque des revendications précédentes, **caractérisé en ce que** lesdits deux vérins de frein (, 6) s'appuient audit étrier de frein (1) et présentent une configuration variable en longueur en sens axial.

10. Frein à disque selon une quelconque des revendications précédentes 8 à 10, **caractérisé en ce que** ladite plaque de jonction (40) est fixée auxdits vérins de frein (5, 6) afin de se déplacer ensemble avec les derniers de manière synchronisée au cours des mouvement de serrage et de réajustage de frein.

11. Frein à disque selon une quelconque des revendications précédentes, **caractérisé en ce qu'**une ouverture additionnelle (43) est formée dans ladite plaque de jonction, à travers de laquelle passe un maneton du vilebrequin (34) entraîné par effort électromoteur afin de mouvoir ladite unité à garniture de frein.

12. Frein à disque selon une quelconque des revendications précédentes, **caractérisé en ce que** chacun desdits groupes à rampe/corps de roulement (44, 45) comprend un creux (46) dans ladite plaque métallique de jonction (40) et un creux correspondant (47) dans ladite unité à garniture de frein (38), dans lesquels creux s'engrène un corps roulant (37) respectif.

13. Frein à disque selon la revendication 12, **caractérisé en ce qu'**une ou les deux creux (46, 47) respectifs dans ladite plaque métallique de jonction (40) ou dans ladite unité à garniture de frein (37) présente(nt) un contour en rampe orienté à une inclinaison relative à l'aire de friction du disque de frein.

14. Frein à disque selon une quelconque des revendications précédentes 12 ou 13, **caractérisé en ce qu'**une ou les deux creux (46, 47) respectifs dans ladite plaque métallique de jonction (40) ou ladite garniture de frein présente(nt) une géométrie adaptée à la géométrie dudit corps de roulement.

15. Frein à disque selon une quelconque des revendications précédentes 12 à 14, **caractérisé en ce que** lesdits creux (46, 47) dans ladite unité à garniture de frein (38) et/ou dans ladite plaque de jonction (40) sont configurés sous forme des voies de roulement en rainure.

16. Frein à disque selon une quelconque des revendications précédentes, **caractérisé en ce que** lesdits corps de roulement (37) ou ledit groupe de corps de roulement (44) consistent en métal.

17. Frein à disque selon une quelconque des revendications précédentes, **caractérisé en ce que** lesdits corps de roulement (37) ou ledit groupe de corps de roulement (44) consistent en métal, matériau céramique, en verre ou en matière synthétique.

18. Frein à disque selon une quelconque des revendications précédentes, **caractérisé en ce que** lesdits creux (14, 46 ou 47) sont configurés en rampe ou à surface conoïque en sens double.

19. Frein à disque selon la revendication 1, **caractérisé en ce qu'**il est configuré sous forme d'un frein à étrier fixe et comprend un ou deux dispositif(s) électromoteur(s) de réajustage d'un côté de réaction du frein en face dudit dispositif de serrage de frein.

20. Frein à disque selon une quelconque des revendications précédentes, **caractérisé en ce que** lesdits vérins de frein (5, 6) sont réalisés sous forme des pistons chasse.

21. Frein à disque selon une quelconque des revendications précédentes, **caractérisé en ce que** ladite unité à garniture de frein (38) consiste en une garniture de frein (20) et éventuellement une plaque de serrage (18).
